Europäisches Patentamt

European Patent Office

Office européen des brevets

(19)

(11) Veröffentlichungsnummer : **0 080 534**
**B1**

(12) # EUROPÄISCHE PATENTSCHRIFT

(45) Veröffentlichungstag der Patentschrift :
19.12.84

(21) Anmeldenummer : 81110818.2

(22) Anmeldetag : 29.12.81

(51) Int. Cl.³ : **C 04 B 41/04**, B 01 J 3/04,
C 25 B 11/14

(54) Verfahren zum Imprägnieren von aus Kohlenstoff bestehenden Gegenständen.

(30) Priorität : 27.11.81 DE 3147040

(43) Veröffentlichungstag der Anmeldung :
08.06.83 Patentblatt 83/23

(45) Bekanntmachung des Hinweises auf die Patenterteilung : 19.12.84 Patentblatt 84/51

(84) Benannte Vertragsstaaten :
AT BE CH DE FR GB IT LI NL SE

(56) Entgegenhaltungen :
DE-A- 1 905 802
DE-A- 3 023 638

(73) Patentinhaber : Feist, Horst J.
Am Mühlengraben 7
D-6969 Hardheim (DE)

(72) Erfinder : Feist, Horst J.
Am Mühlengraben 7
D-6969 Hardheim (DE)

(74) Vertreter : Hach, Hans Karl, Dr.
Tarunstrasse 23
D-6950 Mosbach-Waldstadt (DE)

EP 0 080 534 B1

## Beschreibung

Die Erfindung betrifft ein Verfahren zum Imprägnieren von Steinen, Graphitelektroden, anderen aus Kohlenstoff bestehenden Gegenständen, Transformatorwicklungen und dergleichen Elementen mit einem Imprägniermedium, das im Bereich zwischen einer niedrigen Grenztemperatur und einer höheren Imprägniertemperatur unter Normaldruck ($10^5$ Pa) Kohlenwasserstoff und andere schädliche Gase ausgast, bei dem die zu imprägnierenden Elemente in einem geschlossenen Autoklav einem Vakuum ausgesetzt und dann beheizt und mit dem Imprägniermedium überflutet und unter Druck behandelt werden und das Imprägniermedium dann bei noch geschlossenem Autoklav abgezogen wird, und eine Vorrichtung zur Ausübung dieses Verfahrens.

Bei einem bekannten Verfahren der eingang genannten Art werden die imprägnierten Elemente, während sie noch heiß sind, aus dem Autoklav herausgenommen. Dabei dampfen Kohlenwasserstoffe, Schwefeldioxyd, Stickoxyde, Kohlenmonoxyd und andere Gase aus der noch heißen Imprägnierung und aus den noch heißen, im Autoklav und an den Elementen zurückgebliebenen Resten des Imprägniermediums aus, die giftig und umweltschädlich sind und zu Verlusten an Imprägniermittel führen.

Aufgabe der Erfindung ist es, ein Verfahren und eine Vorrichtung der eingangs genannten Art so auszugestalten, daß das unerwünschte Ausdampfen von Gasen aus dem Imprägniermittel möglichst weitgehend vermieden wird.

Das erfinderische Verfahren ist dadurch gekennzeichnet, daß die Elemente kalt, das heißt mit einer Temperatur, die niedriger ist als die Grenztemperatur, in den kalten Autoklav eingeladen werden, daß dann bei geschlossenem Autoklav die Elemente durch Aufheizen des Autoklav auf die Imprägniertemperatur aufgeheizt werden, daß dann der Autoklav evakuiert wird und für eine Vakuumhaltezeit evakuiert gehalten wird, daß dann der Autoklav mit vorbeheiztem Imprägniermedium überflutet, unter Druck gesetzt und auf Imprägniertemperatur gehalten wird und daß nach Ablauf einer Druckhaltezeit die Druckbelastung und das Imprägniermedium bei noch geschlossenem Autoklav abgezogen wird und daß dann die Elemente bei noch geschlossenem Autoklav durch Kühlen des Autoklav auf eine Temperatur unterhalb der Grenztemperatur abgekühlt werden und erst dann aus dem Autoklav ausgeladen werden.

Die Grenztemperatur ist dabei so festgelegt, daß unterhalb dieser Grenztemperatur die genannten schädlichen Gase, wenn überhaupt, dann nur in geringfügigem Umfang austreten können.

Zum Imprägnieren von feuerfesten Steinen, Graphitelektroden und anderen Kohlenstoffelementen, also Teilen, die aus Kohlenstoff bestehen, verwendet man als Imprägniermittel Teer oder Pech. Für diese beiden Imprägniermittel liegt die Grenztemperatur im Bereich von 50 bis 100 °C (Grad Celsius). Bei der Durchführung des Verfahrens hat sich eine Grenztemperatur von 80 °C bewährt.

Zum Imprägnieren von Transformatorwicklungen verwendet man als Imprägniermittel Epoxydharz. Bei diesem Imprägniermittel liegt die Grenztemperatur im Berich von 50 bis 120 °C. Bei der Durchführung des Verfahrens hat sich eine Grenztemperatur von 100 °C bewährt.

Durch die Abkühlung des Autoklav vor der Entladung wird das Ausgasen ins Freie unterbunden und Ausgasungen, die bei hohen Temperaturen im Füllraum erfolgten, werden bei niederen Temperaturen zum größten Teil niedergeschlagen, so daß auch beim Öffnen des Autoklav, wenn überhaupt, allenfalls nur geringfügige Mengen von schädlichen Gasen austreten können, die man im übrigen mit geeigneten Abzugseinrichtungen leicht beherrschen kann. Wegen des Energiebedarfs bei der Beheizung und zur Beschleunigung des Verfahrensablaufs empfiehlt es sich, das Imprägniermedium auf die Imprägniertemperatur vorgewärmt in den Autoklav einzufüllen. Unerwünschte Ausdampfungen beim Vorwärmen kann man durch entsprechende Abschirmungen des für diesen Zweck vorzusehenden, beheizbaren Vorratstank für das Imprägniermedium verhindern.

Die wechselweise Kühlung und Beheizung des Autoklav erfolgt am einfachsten dadurch, daß dessen Wärmetauscher wechselweise mit gekühltem beziehungsweise beheiztem Wärmeträger durchflossen wird. Insbesondere wenn ein und derselbe Wärmetauscher wechselweise heizend und kühlend betrieben wird, empfiehlt es sich zum Heizen und Kühlen auch den gleichen Wärmeträger, zum Beispiel das gleiche Thermalöl einzusetzen. Zwar wird man auch dann unnötige Vermischungen des zum Heizen dienenden Anteils des Wärmeträgers mit dem zum Kühlen dienenden Anteil vermeiden, aber geringfügige Vermischungen, wie sie beim Übergang von Heizbetrieb auf Kühlbetrieb und umgekehrt stattfinden können, können dann ohne Nachteile hingenommen werden.

Zur Lösung der eingangs dargelegten Aufgabenstellung ist eine Vorrichtung erfindungsgemäß gekennzeichnet durch einen Autoklav, in dessen Füllraum ein Zulaufstutzen und ein Ablaufstutzen für das Imprägniermedium, ein Anschlußstutzen für eine Vakuumpumpe und eine durch eine Drucktür verschließbare Beschickungsöffnung münden, dessen Füllraum innendruckbelastbar und druckdicht abschließbar ist und einen Wärmetauscher aufweist, der kühlend und heizend betreibbar ist.

Mit dieser Vorrichtung können auf einfache Weise bei geringem vorrichtungsmäßigem Aufwand die oben in Verbindung mit dem Verfahren erwähnten Vorteile erzielt werden.

Der Wärmetauscher kann im Inneren des Füllraums angeordnet sein, er kann aber auch in Form einer Ummantelung des Autoklav ausgeführt sein. Die Anordnung des Wärmetauschers im Inneren des Füllraums ist energetisch besonders günstig. Nachteile, die bei innengelegenem Wärmetauscher dadurch entstehen, daß an den Wärmetauschern haften bleibendes Imprägniermedium bei geöffnetem Autoklav schädliche Gase abgibt, werden durch die bei der Erfindung vorgesehene Abkühlung vor dem Öffnen des Autoklav vermieden. Die Erfindung gestattet es, die energetischen Vorteile innen angeordneter Wärmetauscher zu nutzen, ohne dafür Nachteile in Kauf nehmen zu müssen.

Eine besonders einfache wechselweise Beheizung und Kühlung wird ermöglicht durch eine Weiterbildung, die dadurch gekennzeichnet ist, daß der Autoklav die Grundform eines langgestreckten Zylinders hat, dessen Zylindermantel als Doppelwandung ausgebildet ist, in deren Zwischenraum spiralig eine Trennwand vorgesehen ist, durch die eine entlang des Zylindermantels gewundene Flüssigkeitsleitung entsteht, in die an beiden Enden Stutzen münden zum Anschluß eines äußeren Kühlaggregates und eines äußeren Heizaggregates.

Man kann beide Aggregate — das Heizaggregat und das Kühlaggregat — mit dem gleichen Wärmeträger betreiben. Dann ist es nicht nötig, Vorkehrungen zu treffen, daß sich beim Umschalten die Wärmeträger beider Aggregate nicht mischen. Man kann aber auch für beide Aggregate unterschiedliche Wärmeträger verwenden und dann, wenn diese sich nicht mischen sollen, durch entsprechende Armaturen dafür sorgen, daß der Wärmetauscher von dem einen Wärmeträger geleert ist, ehe der andere Wärmeträger eingefüllt wird.

Als Wärmeträger kommt vorzugsweise Thermalöl in Betracht. Daneben sind aber auch andere Wärmeträger einsetzbar, beispielsweise Dampf, Wasser, synthetische Wärmeträger und Salzlösungen. Dampf wird zum Beheizen des Autoklav im Wärmetauscher des Autoklav kondensiert und zum Kühlen wird der Dampf durch Evakuieren in dem Wärmetauscher des Autoklav aus Flüssigkeit erzeugt.

Die Erfindung wird nun anhand der beigefügten Zeichnung näher erläutert.

In der Zeichnung zeigt :

Figur 1  ein Ausführungsbeispiel mit dem Autoklav und der Beladeeinrichtung in Draufsicht und den übrigen Teilen schaltbildmäßig angedeutet,

Figur 2  die Beladeeinrichtung und den Autoklav aus Figur 1 von der Seite gesehen,

Figur 3  den Autoklav eines weiteren Ausführungsbeispiels in der Anordnung gemäß Figur 1 aber im Schnitt,

Figur 4  den Autoklav eines weiteren Ausführungsbeispiels im Schnitt entsprechend Figur 3,

Figur 5  den Teilschnitt V aus Figur 4, und

Figur 6  einen aufrecht stehenden Autoklav im Schnitt mit zugehörigem Hebezeug.

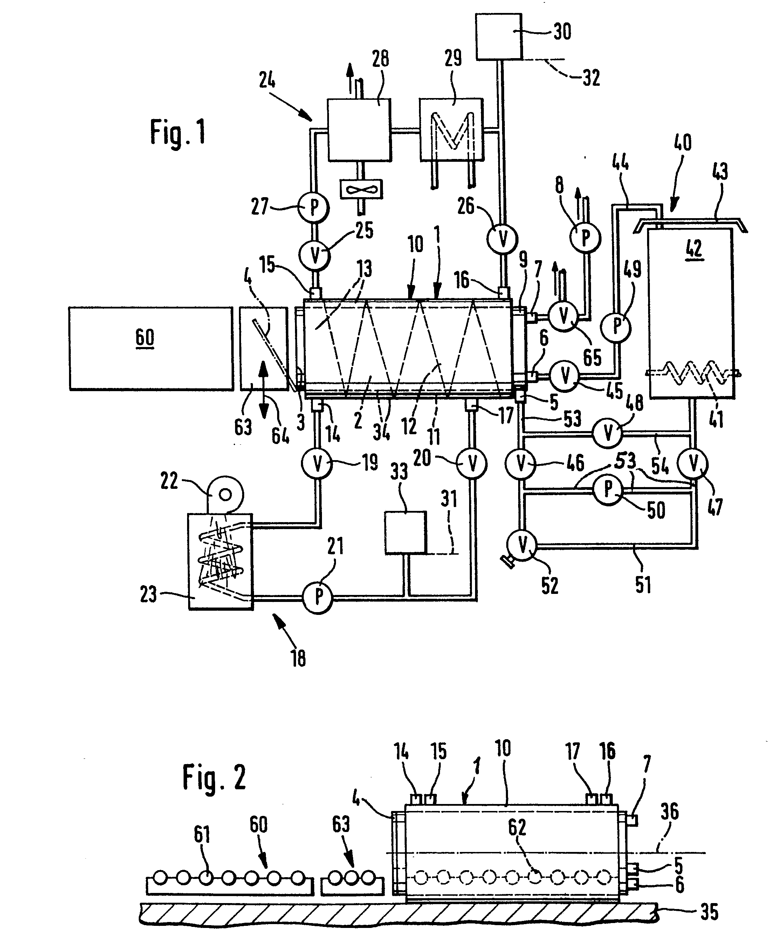

In Figur 1 und 2 ist mit 1 ein Autoklav bezeichnet, der die Form eines langgestreckten, liegenden Zylinders hat und in dessen Füllraum 2 eine durch eine Drucktür 4 verschließbare Beschickungsöffnung 3 mündet. Außerdem mündet in den Füllraum 2 ein Zulaufstutzen 5 und ein Ablaufstutzen 6 für das Imprägniermedium und ein Anschlußstutzen 7 für eine Vakuumpumpe 8.

Der Autoklav 1 liegt mit etwa horizontaler Zylinderachse 36 auf einer horizontalen Unterlage 35.

Der Zylindermantel 9 des Autoklav 1 ist von einem Wärmetauscher 10 umgeben, mit einer Doppelwandung 34, in deren Zwischenraum 11 eine spiralige Trennwand 12 angeordnet ist, durch die innerhalb des Zwischenraums eine wendelförmige Flüssigkeitsleitung 13 entsteht, die vom einen Ende des Autoklav zum anderen reicht. An einem Ende mündet in diese Flüssigkeitsleitung 13 ein Zulaufstutzen 14 für warmes Thermalöl und ein Ablaufstutzen 15 für kaltes Thermalöl. Am anderen Ende mündet in diese Flüssigkeitsleitung ein Zulaufstutzen 16 für kaltes Thermalöl und eine Ablaufstutzen 17 für warmes Thermalöl.

An die beiden Stutzen 14 und 17 ist ein Heizaggregat 18 angeschlossen mit je einem Absperrventil 19, 20 für die beiden Stutzen 14 und 17, einer Umwälzpumpe 21, einem durch einen Brenner 22 betriebenen Durchlauferhitzer 23 und einem Ausdehnungsgefäß 33.

An die Stutzen 15, 16 ist ein Kühlaggregat 24 angeschlossen mit je einem Absperrventil 25, 26 für die beiden Stutzen 15, 16, einer Umwälzpumpe 27, einem als Lufterhitzer ausgebildeten Wärmetauscher 28 und einem als Wassererhitzer ausgebildeten Wärmetauscher 29, die zum Kühlen des Thermalöls dienen und einem Ausdehnungsgefäß 30. Die beiden Ausdehnungsgefäße 24 und 30 sind mit ihrem unteren Niveau 31, 32 mindestens zwei Meter über dem höchsten Niveau der übrigen thermalölführenden Teile der betreffenden Aggregate und des Wärmetauschers 10 angeordnet. Das Heizaggregat 18 und das Kühlaggregat 24 werden mit dem gleichen Thermalöl als Heiz- beziehungsweise Kühlmittel betrieben, wobei gegenseitige Vermischungen der Öle zwar aus energetischen Gründen möglichst vermieden werden sollen aber nicht schädlich sind und im Interesse einer Vereinfachung des Betriebes und der Steuerung in Kauf genommen werden können. Die beiden Aggregate 18 und 24 und mit in der Zeichnung nicht dargestellten Temperaturfühlern, Thermostaten und Steuerungseinrichtungen ausgestattet.

Mit 40 ist ein Imprägniermediumaggregat bezeichnet, das an den Zulaufstutzen 5 und den Ablaufstutzen 6 angeschlossen ist. Das Imprägniermediumaggregat besteht aus einem durch die Heizung 41 beheizbaren Vorratstank 42, der mit einem Gasfänger 43 für Ausgasungen ausgestattet ist. Der Vorratstank 42 ist über die Rücklaufleitung 44, die mit einem Absperrventil 45 und einer Förderpumpe 49 ausgestattet ist, an den Ablaufstutzen 6 angeschlossen und über die Zulaufleitung 53, die mit zwei Absperrventilen 46, 47 und mit einer Einfülldruckpumpe 50 ausgestattet ist, an den Zulaufstutzen 5 angeschlossen. Die Einfülldruckpumpe 50 ist durch eine Rückführleitung 51 überbrückt, in der sich ein Überdruckventil 52 befindet, dessen Ansprechdruck einstellbar ist. Für die Zulaufleitung 53 ist ein durch ein Absperrventil 48 absperrbarer Brückenzweig 54 vongesehen.

Vor der Beschickungsöffnung 3 steht eine Beladeeinrichtung 60 mit einem Palettenförderer 61, der mit einem am Boden des Füllraums 2 angeordneten Palettenförderer 62 fluchtet. Zwischen beiden Palettenförderern ist außerhalb des Autoklav 1 ein mit diesen fluchtender, als Palettenförderer ausgebildeter Zwischenförderer 63 angeordnet, der in Richtung des Doppelpfeils 64 verfahrbar ist. Dieser Zwischenförderer 63 gestattet es, mehrere nebeneinander aufgestellte Autoklaven aus mehreren nebeneinander angeordneten Beladeeinrichtungen wechselweise zu beschicken.

Die Beschickungsöffnung 3 dient auch als Entladeöffnung. Beim Entladen dient die Beladeeinrichtung 60 als Entladeeinrichtung.

An den Stutzen 7 ist über ein zur Be- und Entlüftung dienendes Mehrwegeventil 65 die Saugseite der Vakuumpumpe 8 angeschlossen.

Bei abgesperrten Ventilen 45, 46, 48, 65 und geschlossener Drucktür 4 ist der Füllraum 2 druckdicht nach außen abgesperrt.

Die Vorrichtung wird wie folgt betrieben : Bei geöffneter Beschickungsöffnung 3 werden in den kalten Autoklav 1 von der Beladeeinrichtung 60 auf Paletten abgelegte Elemente, die imprägniert werden sollen, zum Beispiel Graphitelektroden, eingeladen. Die Elemente sind dabei ebenfalls kalt. Kalt bedeutet hier und im folgenden, daß die Grenztemperatur nicht überschritten wird. Für den Fall, daß es sich bei den einzuladenden Elementen um bereits vorimprägnierte Elemente handelt, ist sichergestellt, daß von dieser Vorimprägnierung keine Gase abgegeben werden, weil diese Elemente, solange sie sich noch außerhalb des Autoklav befinden, kalt sind.

Sobald der Autoklav gefüllt ist, wird er verschlossen und druckdicht abgesperrt. Nun wird durch das Heizaggregat 18 heißes Thermalöl durch den Wärmetauscher 10 geleitet bis im Autoklav die Imprägniertemperatur erreicht ist. Sobald die Imprägniertemperatur erreicht ist, wird über die Vakuumpumpe 8 der Füllraum 2 evakuiert. Dieses Vakuum wird über eine vorher eingestellte Zeit, die sogenannte Vakuumzeit, aufrechterhalten. Nach Ablauf dieser Zeit wird aus dem Vorratstank 42 auf die Imprägniertemperatur verbeheiztes Imprägniermedium in den Füllraum 2 geflutet, bis dieser vollständig mit Imprägniermedium gefüllt ist. Das eingefüllte Imprägniermedium wird mittels der Einfülldruckpumpe 50 unter einen Imprägnierdruck gesetzt und auf diesem Imprägnierdruck über eine vorgegebene Druckhaltezeit gehalten. Danach wird das Imprägniermedium mit der Förderpumpe 49 wieder zurück in den Vorratstank 42 gepumpt und dabei wird der Füllraum möglichst weitgehend von Resten des Imprägniermediums geleert. Bis zum Abpumpen des Imprägniermediums wurde im Autoklav mittels des Heizaggregates 18 die Imprägniertemperatur aufrechterhalten. Dann wird das Heizaggregat 18 abgeschaltet und vom Wärmetauscher 10 abgesperrt.

Sobald das Imprägniermedium abgepumpt ist wird der Wärmetauscher 10 mit kaltem Thermalöl vom Kühlaggregat durchströmt bis der Autoklav und dessen Inhalt auf eine Temperatur unterhalb der Grenztemperatur abgekühlt sind. Ist das der Fall, dann wird das Kühlaggregat 24 abgeschaltet und vom Wärmetauscher 10 abgesperrt, die Drucktür 4 wird geöffnet und die imprägnierten Elemente werden auf ihren Paletten durch die Beschickungsöffnung 3 ausgefahren und es können neue, zu imprägnierende Elemente eingefahren werden, die dann wie beschrieben imprägniert werden.

Bevorzugte Betriebsdaten für dieses Ausführungsbeispiel mit zugehörigen Spannen sind in den nachfolgenden Tabellen I bis III angegeben.

## Tabelle I

Betriebsdaten für die Behandlung von feuerfesten Steinen als zu imprägnierende Elemente

| | bevorzugte Betriebsdaten | Spanne für mögliche Betriebsdaten |
|---|---|---|
| Grenztemperatur in °C | 80 | 50 – 100 |
| Vakuum in Pa | kleiner als 1333 | kleiner als 1333 – 2400 |
| Vakuumzeit in Min. | 40 | 15 – 40 |
| Imprägniertemperatur in °C | 230 | 100 – 280 |
| Druckhaltezeit in Min. | 40 | 15 – 90 |
| Imprägnierdruck in bar | 4,5 | 3 – 25 |
| Imprägniermedium | Teer oder Pech | |

4

## 0 080 534

Tabelle II

Betriebsdaten für die Behandlung von Transformatorwicklungen als zu imprägnierende Elemente

|  | bevorzugte Betriebsdaten | Spanne für mögliche Betriebsdaten |
|---|---|---|
| Grenztemperatur in °C | 100 | 50 – 120 |
| Vakuum in Pa | kleiner als 1333 | kleiner als 1333 – 2400 |
| Vakuumzeit in Min. | 20 | 15 – 20 |
| Imprägniertemperatur in °C | 100 | 30 – 120 |
| Druckhaltezeit in Min. | 20 | 15 – 20 |
| Imprägnierdruck in bar | 15 | 5 – 20 |
| Imprägniermedium | E p o x y d h a r z | |

Tabelle III

Betriebsdaten für die Behandlung von anodischen Graphitelektroden und anderen aus Kohlenstoff bestehenden Gegenständen als zu imprägnierende Elemente

|  | bevorzugte Betriebsdaten | Spanne für mögliche Betriebsdaten |
|---|---|---|
| Grenztemperatur in °C | 80 | 50 – 100 |
| Vakuum in Pa | kleiner als 1333 | kleiner als 1333 – 2400 |
| Vakuumzeit in Min. | 20 | 10 – 45 |
| Imprägniertemperatur in °C | 220 | 180 – 300 |
| Druckhaltezeit in Min. | 90 | 30 – 180 |
| Imprägnierdruck in bar | 20 | 8 – 25 |
| Imprägniermedium | Teer oder Pech | |

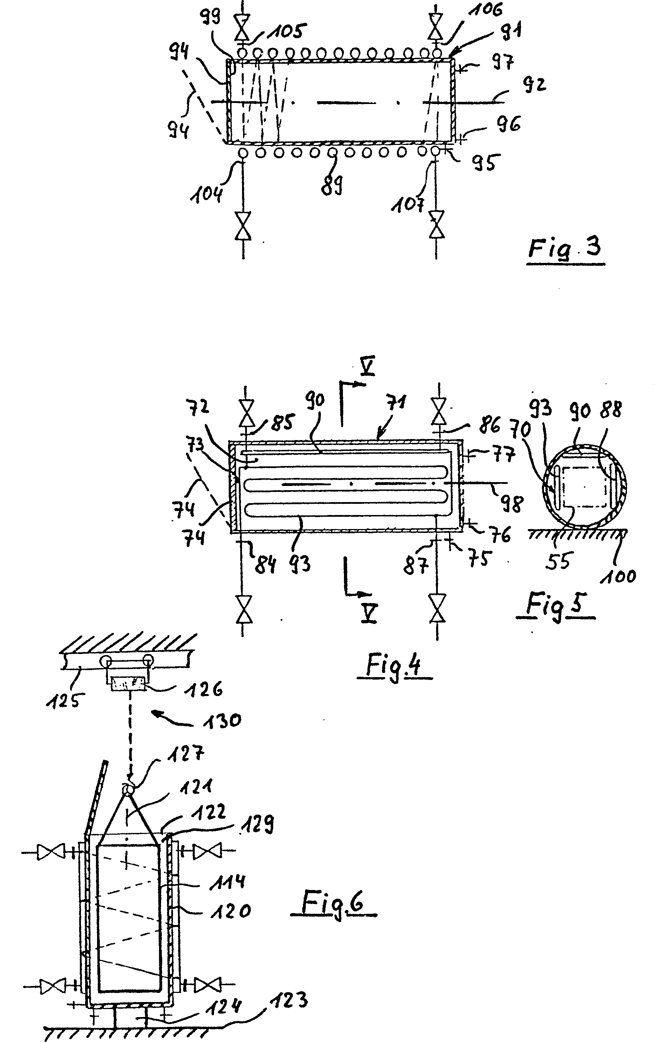

Die Ausführungsbeispiele aus den nachfolgenden Figuren 3 bis 6 unterscheiden sich von dem Ausführungsbeispiel nach Figur 1 und 2 nur durch die Ausgestaltung und Anordnung des Autoklaven und nach Figur 6 auch durch dessen Beschickung. Im übrigen sind die Ausführungsbeispiele genau so ausgebildet wie das Ausführungsbeispiel nach Figur 1 und 2 und werden auch genau so betrieben. In den Figuren 3 bis 6 nicht dargestellte Teile können genau so ausgeführt werden wie die entsprechenden Teile aus Figur 1 und 2. Der Autoklav 91 unterscheidet sich von dem Autoklav 1 nur durch die Ausgestaltung des Wärmetauscher 89, der aus einer Heizschlange besteht, die um die Wandung des Autoklav gewickelt ist. Über den Zulaufstutzen 14 und 16 entsprechende Zulaufstutzen 104 und 106 sowie den Ablaufstutzen 15 und 17 entsprechende Ablaufstutzen 105 und 107 ist der Wärmetauscher 89 an ein dem Kühlaggregat 24 entsprechendes Kühlaggregat und ein dem Heizaggregat 18 entsprechendes Heizaggregat angeschlossen. Der Zulaufstutzen 95 entspricht dem Zulaufstutzen 5, der Ablaufstutzen 96 dem Ablaufstutzen 6 und der Anschlußstutzen 97 dem Anschlußstutzen 7. Mit 99 ist die Beschickungsöffnung bezeichnet, die durch eine Drucktür 94 verschließbar ist. Der Autoklav 91 ist mit im wesentlichen horizontaler Zylinderachse 92 liegend auf einer parallel zur Zeichenebene horizontal gelegenen Unterlage abgelegt.

Der Autoklav 71 unterscheidet sich von dem Autoklav 1 im wesentlichen nur durch den Wärmetau-

5

scher 70, der im Füllraum 72 des Autoklav 71 angeordnet ist und aus drei Schlangenpaketen 88, 90, 93 besteht, die parallel geschaltet an die den Zulaufstutzen 14 und 16 entsprechenden Zulaufstutzen 84 und 86 und den den Ablaufstutzen 15 und 17 entsprechenden Ablaufstutzen 85 und 87 angeschlossen sind. Dem Zulaufstutzen 5 entspricht der Zulaufstutzen 75, dem Ablaufstutzen 6 entspricht der Ablaufstutzen 76 und dem Anschlußstutzen 7 entspricht der Anschlußstutzen 77. Die Beschickungsöffnung 73 ist durch die Drucktür 74 verschließbar. Der Autoklav ist mit horizontaler Zylinderachse 98 auf einer horizontalen Unterlage 100 abgelegt. Zwischen den Schlangenpaketen 88, 90, 93 ist innerhalb des Füllraums 72 Platz für eine mit Elementen beladene eingefahrene Palette 55.

Der Autoklav 120 aus Figur 6 ist genau so ausgebildet wie der Autoklav 1 aus Figur 1. Er ist jedoch mit vertikaler Zylinderachse 121 aufrecht mit der Beschickungsöffnung 122 nach oben weisend auf einer horizontalen Unterlage 123 mit dem Bock 124 aufgebockt. Oberhalb des Autoklav ist eine Kranschiene 125 verlegt, auf der eine Laufkatze 126 verfahrbar ist. Die Laufkatze gehört zu einem allgemein mit 130 bezeichneten Hebezeug mit Kranhaken 127 zum Lastenhochziehen. An dem Kranhaken 127 hängt zum Beladen und Entladen des Autoklav ein Elemententräger 114, auf dem die zu imprägnierenden Elemente abgelegt sind. Der Elemententräger 114 paßt mit den aufgelegten Elementen von oben in den Füllraum 129 hinein und wird beim Imprägnieren im Füllraum abgestellt und vom Kranhaken 127 gelöst.

## Ansprüche

1. Verfahren zum Imprägnieren von Steinen, Graphitelektroden, anderen aus Kohlenstoff bestehenden Gegenständen, Transformatorwicklungen und dergleichen Elementen mit einem Imprägniermedium, das im Bereich zwischen einer niedrigen Grenztemperatur und einer höheren Imprägniertemperatur unter Normaldruck ($10^5$ Pa) Kohlenwasserstoff oder ander schädliche Gase ausgast, bei dem die zu imprägnierenden Elemente in einem geschlossenen Autoklav einem Vakuum ausgesetzt und dann beheizt und mit dem Imprägniermedium überflutet und unter Druck behandelt werden und das Imprägniermedium dann bei noch geschlossenem Autoklav abgezogen wird, dadurch gekennzeichnet, daß die Elemente kalt, das heißt mit einer Temperatur, die niedriger ist als die Grenztemperatur, in den kalten Autoklav eingeladen werden, daß dann bei geschlossenem Autoklav die Elemente durch Aufheizen des Autoklav auf die Imprägniertemperatur aufgeheizt werden, daß dann der Autoklav evakuiert wird und für eine Vakuumhaltezeit evakuiert gehalten wird, daß dann der Autoklav mit vorbeheiztem Imprägniermedium überflutet, unter Druck gesetzt und auf Imprägniertemperatur gehalten wird und daß nach Ablauf einer Druckhaltezeit die Druckbelastung und das Imprägniermedium bei noch geschlossenem Autoklav abgezogen wird und daß dann die Elemente bei noch geschlossenem Autoklav durch Kühlen des Autoklav auf eine Temperatur unterhalb der Grenztemperatur abgekühlt werden und erst dann aus dem Autoklav ausgeladen werden.

2. Verfahren nach Anspruch 1 oder 2, dadurch gekennzeichnet, daß zum Kühlen und Heizen des Autoklav dessen Wärmetauscher wechselweise kühlend und heizend betrieben wird.

3. Verfahren nach Anspruch 1 oder 2, dadurch gekennzeichnet, daß zum Kühlen und Heizen der gleiche Wärmeträger verwendet wird.

4. Vorrichtung zur Ausübung des Verfahrens nach einem der Ansprüche 1 bis 3, gekennzeichnet durch einen Autoklav (1, 71), in dessen Füllraum (2) ein Zulaufstutzen (5) und ein Ablaufstutzen (6) für das Imprägniermedium, ein Anschlußstutzen (7) für eine Vakuumpumpe (8) und eine durch eine Drucktür (4) verschließbare Beschickungsöffnung (3) münden, dessen Füllraum (2) innendruckbelastbar und druckdicht abschließbar ist und einen Wärmetauscher (10, 70) aufweist, der kühlend und heizend betreibbar ist.

5. Vorrichtung nach Anspruch 4, dadurch gekennzeichnet, daß der Wärmetauscher (70) im Inneren des Autoklav (71) angeordnet ist.

6. Vorrichtung nach Anspruch 4, dadurch gekennzeichnet, daß der Wärmetauscher (10) als Ummantelung des Autoklav (1) ausgebildet ist.

7. Vorrichtung nach Anspruch 6, dadurch gekennzeichnet, daß der Autoklav (1) die Grundform eines langgestreckten Zylinders hat, dessen Zylindermantel als Doppelwandung (34) ausgebildet ist, in deren Zwischenraum (11) spiralig eine Trennwand (12) vorgesehen ist, durch die eine, entlang des Zylindermantels gewundene Flüssigkeitsleitung (13) entsteht, in die an beiden Enden Stutzen (14 bis 17) münden zum Anschluß eines äußeren Kühlaggregats (24) und eines äußeren Heizaggregates (18).

8. Vorrichtung nach einem der vorhergehenden Vorrichtungsansprüche, gekennzeichnet durch ein an den Wärmetauscher (10) über Absperrventile (25, 26) angeschlossenes Kühlaggregat (24) und ein an den Wärmetauscher über Absperrventile (19, 20) angeschlossenes Heizaggregat (18), und dadurch, daß das Heizaggregat (18) und das Kühlaggregat (24) mit dem gleichen Wärmeträger betreibbar ist.

9. Vorrichtung nach einem der vorgehenden Vorrichtungsansprüche, dadurch gekennzeichnet, daß der Autoklav (1) die Grundform eines liegenden, langgestreckten Zylinders hat und daß entlang des Bodens im Füllraum (2) ein sich über die ganze Länge des Füllraums erstreckender Palettenförderer (62) angeordnet ist, der durch die Beschickungsöffnung (3) mit einem außerhalb des Autoklav (1) angeordneten Palettenförderer (61) fluchtet.

10. Vorrichtung nach einem der Ansprüche 4 bis 8, dadurch gekennzeichnet, daß der Autoklav (120) die Grundform eines aufrecht angeordneten, langgestreckten Zylinders hat, an dem die Beschickungsöffnung (122) an der oberen Stirnseite angeordnet ist und daß ein von oben bei geöffneter Beschickungsöffnung in den Füllraum passender Palettenträger (114) vorgesehen ist, dem ein äußeres Hebezeug (130) zugeordnet ist.

**Claims**

1. A procedure for impregnating stones, graphite electrodes and other objects consisting of carbon as well as transformer windings and similar elements with an impregnating agent liberating hydrocarbon or other noxious gases at normal pressure ($10^5$ Pa) in a temperature range between a low limit temperature and a higher impregnation temperature, the elements to be impregnated being exposed to a vacuum and then heated and inundated with the impregnating agent and processed under pressure in a sealed autoclave, with the impregnating agent being drained off while the autoclave is still sealed, the characteristic features of the procedure being that the elements are fed into the cold autoclave in a cold state, i. e. at a temperature lower than the limit temperature, that the sealed autoclave is then heated in order to raise the elements to the impregnation temperature, that the autoclave is subsequently evacuated and kept in the evacuated state during a vacuum holding time and then inundated with the preheated impregnating agent, pressurized and kept at the impregnation temperature, and that after expiration of a pressure holding time the compressive load and the impregnating agent are removed while the autoclave is still sealed, and that the elements are withdrawn from the autoclave only after they have been cooled to a temperature below the limit temperature with the autoclave still sealed.

2. A procedure set forth in claim 1 or 2, its characteristic feature being that the heat exchanger of the autoclave is alternately used to cool and to heat the autoclave.

3. A procedure set forth in claim 1 or 2, its characteristic feature being that the same heat-exchanging medium is used for both cooling and heating purposes.

4. A device used to carry out the procedure set forth in one of claims 1 through 3, its characteristic features being an autoclave (1, 71) whose loading chamber (2) is provided with an inlet pipe connection (5) and an outlet pipe connection (6) for the impregnating agent, a pipe connection (7) for a vacuum pump (8), and a charging opening (3) sealed by means of a pressure door (4), said loading chamber (2) being capable of withstanding internal pressure and of being sealed so as to be pressure-tight, and being provided with a heat exchanger (10, 70) which can be used for both cooling and heating purposes.

5. A device set forth in claim 4, its characteristic feature being that the heat exchanger (70) is mounted in the interior of the autoclave (71).

6. A device set forth in claim 4, its characteristic feature being that the heat exchanger (10) is constructed in the form of a jacket to the autoclave (1).

7. A device set forth in claim 6, its characteristic features being that the autoclave (1) has the basic shape of an elongated cylinder whose cylinder jacket is constructed as a double wall (34) whose interspace (11) contains a spiral-shaped partition wall (12) forming a liquid line (13) wound along the cylinder jacket and equipped at both ends with pipe connections (14 to 17) leading to an external cooling unit (24) and an external heating unit (18).

8. A device set forth in one of the preceding device claims, its characteristic features being a cooling unit (24) which is connected to the heat exchanger (10) via shut-off valves (25, 26), and a heating unit (18) which is connected to the heat exchanger via shut-off valves (19, 20), and the fact that the same heat-exchanging medium can be used for both the heating unit (18) and the cooling unit (24).

9. A device set forth in one of the preceding device claims, its characteristic feature being that the autoclave (1) has the basic shape of a horizontal elongated cylinder, and that along the bottom of the loading chamber (2) there is a pallet conveyor (62) which extends over the whole length of the loading chamber and is aligned through the charging opening (3) with a pallet conveyor (61) mounted outside the autoclave (1).

10. A device set forth in one of claims 4 through 8, its characteristic features being that the autoclave (120) has the basic shape of a vertical elongated cylinder whose charging opening (122) is situated at its upper front face, and that a pallet carrier (114) is provided which fits into the loading chamber from above when the charging opening is open, and which works in conjunction with an external hoisting apparatus (130).

**Revendications**

1. Procédé d'imprégnation de pierres, d'électrodes de graphite et d'autres objets en carbone, d'enroulements de transformateurs et d'éléments semblables, au moyen d'un produit d'imprégnation qui, dans la zone de températures comprises entre une température limite inférieure et une température d'imprégnation plus élevée sous pression normale ($10^5$ Pa), dégage des hydrocarbures ou d'autres gaz délétères, à savoir un procédé dans lequel les éléments à imprégner sont exposés au vide dans un autoclave hermétiquement fermé et ensuite chauffés puis noyés dans le produit d'imprégnation et traités sous pression, à savoir un procédé dans lequel le produit d'imprégnation est retiré, l'autoclave étant

7

encore fermé, à savoir un procédé caractérisé par le fait que les éléments à imprégner sont introduits à froid dans l'autoclave froid, le mot froid voulant dire, à une température plus basse que la température limite, qu'ensuite l'autoclave étant hermétiquement fermé, les éléments à imprégner sont chauffés en échauffant l'autoclave jusqu'à atteindre la température d'imprégnation, qu'on fait ensuite le vide dans l'autoclave et que ce vide y est maintenu pendant un temps déterminé, appelé temps de maintien du vide, que l'autoclave est ensuite rempli d'un produit d'imprégnation préalablement chauffé, mais sous pression et maintenu à la température d'imprégnation et qu'après écoulement d'un temps déterminé, appelé temps de maintien de la pression, celle-ci est supprimée et qu'alors le produit d'imprégnation est retiré, l'autoclave étant encore hermétiquement fermé et que les éléments à imprégner, l'autoclave étant encore hermétiquement fermé, soient par refroidissement de l'autoclave refroidis à une température inférieure à la température limite et que ce n'est qu'alors qu'ils sont déchargés de l'autoclave.

2. Procédé, conforme à la revendication 1 ou 2, caractérisé par le fait que pour refroidir et chauffer l'autoclave, l'échangeur de chaleur de celui-ci fonctionne en alternant le chauffage et le refroidissement.

3. Procédé conforme à la revendication 1 ou 2, caractérisé par le fait que pour chauffer et refroidir, on utilise le même fluide caloporteur.

4. Dispositif d'application du procédé d'imprégnation, conforme à une des revendications 1 à 3, caractérisé par la présence d'un autoclave (1, 71) dans l'espace de remplissage (2) duquel débouchent une tubulure d'entrée (5) et une tubulure de sortie (6) du produit d'imprégnation, une tubulure (7) de raccordement de la pompe à vide (8) et une ouverture de chargement (3) hermétiquement fermable par une porte pneumatique (4), à savoir d'un autoclave dont l'espace de remplissage (2) est soumis à une pression intérieure et peut être hermétiquement fermé de manière à le rendre étanche à la pression, cet autoclave se caractérisant par la présence d'un échangeur de chaleur (10, 70) exploitable en refroidissant ou en échauffant.

5. Dispositif, conforme à la revendication 4, caractérisé par le fait que l'échangeur de chaleur (70) est placé à l'intérieur de l'autoclave (71).

6. Dispositif, conforme à la revendication 4, caractérisé par le fait que l'échangeur de chaleur (10) est réalisé de manière à enrober l'autoclave (1).

7. Dispositif, conforme à la revendication 6, caractérisé par le fait que l'autoclave (1) a fondamentalement la forme d'un cylindre étiré en longueur, à savoir un autoclave dont le manteau de cylindre a la forme d'une double paroi (34), dans l'espace intermédiaire (11) de laquelle il est prévu une paroi de séparation en spirale (12) au moyen de laquelle il se forme une conduite de liquide (13) enroulée le long du manteau du cylindre, à savoir une conduite dans laquelle débouchent aux deux extrémités des tubulures (14 à 17) servant à raccorder le groupe de refroidissement extérieur (24) et le groupe de chauffage extérieur (18).

8. Dispositif, conforme à une des revendications précédentes, caractérisé par la présence d'un groupe refroidisseur (24) raccordé à un échangeur de chaleur (10) par l'intermédiaire de valves de retenue (25, 26) et par la présence d'un groupe de chauffage (18) raccordé à l'échangeur de chaleur par l'intermédiaire de valves de retenue (19, 20), à savoir un dispositif également caractérisé par le fait que le groupe de chauffage (18) et le groupe de refroidissement (24) sont exploitables avec le même fluide caloporteur.

9. Dispositif, conforme à une des revendications précédentes, caractérisé par le fait que l'autoclave (1) a fondamentalement la forme d'un cylindre horizontal étiré en longueur et que le long du fond, dans l'espace de remplissage (2) il est placé un transporteur à palettes (62), s'étendant sur toute la longueur de l'espace de remplissage, à savoir un transporteur qui, à travers l'ouverture de chargement (3) s'aligne avec un transporteur à palettes (61), placé à l'extérieur de l'autoclave (1).

10. Dispositif, conforme à une des revendications 4 à 8, caractérisé par le fait que l'autoclave (120) a fondamentalement la forme d'un cylindre, placé debout et étiré en longueur, pourvu d'une ouverture de chargement (122) à la face frontale supérieure, à savoir un dispositif caractérisé encore par le fait qu'il est prévu un porteur de palettes (114) convenant pour entrer tout juste par le haut dans l'espace de remplissage de l'autoclave, lorsque l'ouverture de chargement est ouverte, à savoir un porteur de palettes auquel il est adjoint un engin de levage (130).

Fig. 1

Fig. 2

Fig. 3

Fig. 4

Fig 5

Fig. 6